# EUROPEAN PATENT SPECIFICATION

(11) **EP 3 720 904 B1**
(45) Date of publication and mention of the grant of the patent: **23.10.2024**
(21) Application number: 18826779.3
(22) Date of filing: 03.12.2018
(51) Int. Cl.: B60R 13/02, B32B 1/00, B32B 3/08, B32B 3/10, B32B 3/26, B32B 3/30, B32B 5/02, B32B 9/00, B32B 15/10, B32B 15/20, B32B 21/04, B32B 21/08, B32B 21/10, B32B 21/14, B32B 27/06, B44C 1/26, B44C 3/10, C08K 3/22, C08K 3/34, C08K 3/36, C08L 63/00

(54) **AUTOMOTIVE COMPONENTS COMPRISING CERAMICS AND METHODS OF FORMING SAME**
KRAFTFAHRZEUGKOMPONENTEN MIT KERAMIK UND VERFAHREN ZUR HERSTELLUNG DAVON
ÉLÉMENTS DE VÉHICULES AUTOMOBILES COMPRENANT INCRUSTATIONS EN CÉRAMIQUE ET PROCÉDÉS DE FORMATION DE CEUX-CI

(30) Priority: 05.12.2017 GB 201720221
(43) Date of publication of application: 14.10.2020
(73) Proprietor: Bentley Motors Limited, Crewe, Cheshire CW1 3PL (GB)
(72) Inventor: STANFORTH, Stephen Joseph, Nuneaton Warwickshire CV10 8RB (GB)
(74) Representative: Wilson Gunn
(86) International application number: PCT/GB2018/053500
(87) International publication number: WO 2019/110970

(56) References cited:
- EP-A1- 1 679 169
- EP-A1- 3 315 573
- EP-A2- 0 414 149
- EP-A2- 1 375 460
- DE-A1- 2 926 983
- DE-C1- 19 754 420
- GB-A- 2 430 408
- ANONYMOUS: "L'Or Blanc", 2024, Retrieved from the Internet <URL:https://www.bugatti.com/the-bugatti-heritage/modern-icons/veyron/bugatti-editions/lor-blanc/> [retrieved on 20240529]
- ANONYMOUS: "The Bugatti "L'Or Blanc"", 30 June 2011 (2011-06-30), Retrieved from the Internet <URL:https://newsroom.bugatti.com/press-releases/the-bugatti-l-or-blanc-> [retrieved on 20240529]

## Description

### Technical Field of the Invention

The present invention relates to ceramic automotive components and methods of forming the same. In particular, but not exclusively, the invention relates to the formation of porcelain inlays in veneers, e.g. of wood, in automotive trim components, such as panels and instrument panels.

### Background to the Invention

In the luxury automotive context it is considered desirable to produce components from novel and aesthetically appealing materials. Over time materials used in luxury cars can often be transferred to other segments of the automotive market and it is recognised that novel materials and manufacturing methods from the automotive market may be adopted in other contexts, for example in furniture. In connection with the production of components from novel materials, in 2011 Bugatti produced a Veyron in 2011, which included certain porcelain components. As is well known, porcelain, and indeed other ceramics, change shape during the firing process. Typically, porcelain shrinks by about 5-10% when fired. Ripples/valleys are also typically produced in the outer surface when fired. Accordingly, it is understood that chrome bezels were applied around the ceramic components in order to hide any gaps.

Nonetheless porcelain in particular, and other ceramics, remain desirable.

Other decorative elements are described in the prior art, such as DE1954420 where a method uses a non-figured veneer (2) with a surface filling upper layer stamped onto it. The stamped upper face has a colour dye impregnated into it (4) to form a tone which is optically improved. The veneer is then clear lacquered. The upper surface can be over stamped with a simulated wood grain.

### Summary of the Invention

According to a first aspect of the invention there is provided an automotive component having an inlay formed of a powder in a resin, wherein the powder is or comprises ceramic powder.

The inventor has found that the problem of changing size during the firing process can be overcome by forming a paste with a powder (such as post-fired ceramics) in a resin, and introducing that as an inlay in a component. Where the powder is porcelain, the result has the appearance of inlaid porcelain piece, but it is recognised that the same solution would work with other powders (and that it could be used outside the automotive context).

The inlay may be formed in recess having a depth of at least 1.2mm. This can ensure adhesion.

The component may be trim. In particular, the component may be a trim panel, instrument panel or the like. The component may comprise a decorative veneer and the inlay may be provided in the veneer. The veneer may be a wood veneer, for example. Alternatively, it could be metal, plastic, composite (e.g. carbon fibre or the like), or any other suitable material. The veneer may be provided as part of a lamination pack, having a support, for attachment to a substrate. The veneer may be adhered to the support. The support may be adhered to the substrate. The recess may extend through the veneer into the support. The recess may extend through the veneer and the support into the substrate.

The automotive component is preferably a component which is visible in use, and in particular a decorative component. As in the first embodiment, the automotive component could be trim, e.g. a trim panel or instrument panel.

Whilst the inlaying technique of the first aspect of the invention is particularly preferred and has the advantage of the component not changing size during firing, such that the inlay fits in the component without leaving gaps, it has been recognised that this method of forming components has a distinct advantage over a traditional process for forming porcelain items in that, when the components are smashed, if they are formed of a powder in a resin are shatterproof, and will not break into the sharp shards typical of broken ceramics. Thus, even where it is not essential that the ceramic part fits into a specific space, a component formed of powder in a resin will offer better performance in the event of a crash than a corresponding component formed of ceramic in the traditional manner. Indeed, a large part (such as an instrument panel) formed from ceramic, or having a large inlay in ceramic, could break into large sharp parts in the event of a crash, which could be extremely hazardous.

Moreover, not only can the possibility of breaking into sharp pieces be avoided by the invention, but the component of the invention is also less fragile and therefore less likely to chip or crack.

The following options apply to both the components of both the first and the second aspects of the invention.

The powder may comprise alumina. The ceramic may be porcelain. The ceramic (e.g. porcelain) powder may be post-fired. Use of post-fired porcelain powder (or another ceramic) achieves the same appearance as a fired piece, which is quite different from the unfired porcelain.

The resin may be an epoxy resin. The resin may be clear. This allows the colour (and shine) of the ceramic to be seen best. The resin may alternatively be coloured, and may be coloured by inclusion of a dye or pigment (i.e. deliberately coloured). This could produce an attractive appearance too. In either case, the resin can give the material a shine comparable to that of glazed porcelain.

The component may be lacquered. The lacquer may be open pore or high gloss. An open pore lacquer allows heat to transfer easily to the porcelain, giving a "cold-to-touch" feel of a traditionally produced porcelain item. A high gloss lacquer enhances the visual appeal of the component. The lacquer can be polyurethane (which is typically clearer) or polyester.

The component may comprise a layer of enamel paint on the powder in the resin, or on part thereof.

The component may be a component of the interior of an automobile, i.e. the passenger compartment, in particular a visible component.

According to a second aspect of the invention, there is provided a method of forming an inlay in an automotive component comprising mixing a ceramic powder into a resin to form a paste and introducing the paste into a recess in the component.

The method may comprise forming a recess in the component, for example by milling. The recess may be formed in a decorative pattern.

The recess may be formed in or through a veneer and in or through a laminate pack optionally into a substrate e.g. by milling.

The method may comprise pouring or pressing the paste into the recess.

The method may comprise over-filling the recess, such that the paste extends beyond the surface in which the recess is formed.

The method may comprise removing bubbles from the paste in the recess. This may be done by vacuuming or shaking.

The method may comprise allowing the paste to set, then smoothing the surface of the set paste.

The set paste and the surrounding component, e.g. the surrounding veneer, may be smoothed to produce a flat surface. The smoothing may be by sanding.

The method may comprise coating the smoothed surface of the set paste and optionally the surrounding component, e.g. the surrounding veneer, with a lacquer.

The method may comprise painting the set paste with enamel paint prior to lacquering.

The method may form an inlay according to the first aspect of the invention and may comprise any of the optional features associated therewith.

The method may comprise removing bubbles from the paste. This may be done by vacuuming or shaking.

The method may comprise allowing the paste to set, then smoothing the surface of the set paste.

The set paste and any surrounding part of the component may be smoothed, optionally to produce a flat surface. The smoothing may be by sanding.

The method may comprise coating the set paste, optionally the smoothed surface of the set paste (if smoothing as taken place) and optionally any surrounding part of the component with a lacquer.

The method may comprise painting the set paste with enamel paint prior to lacquering.

In the second aspect of the invention, the method may comprise firing a ceramic and forming a powder from the post-fired ceramic (e.g. by grinding). This should be done prior to forming the paste.

### Detailed Description of the Invention

In order that the invention may be more clearly understood embodiments thereof will now be described, by way of example only, with reference to the accompanying drawings, of which:
- Figure 1: shows a perspective view of an automobile;
- Figure 2: shows a plan view of part of an instrument panel of the automobile of figure 1;
- Figure 3a: shows a cross sectional view through part of the instrument panel of figure 2 prior to the formation of a ceramic inlay;
- Figure 3b: shows a cross sectional view through the instrument panel of figure 3a with recesses cut into it;
- Figure 3c: shows a cross sectional view through the instrument panel of figure 3b with the recesses over-filled;
- Figure 3d: shows a cross sectional view of the instrument panel of figure 3c with the outer surface smoothed; and
- Figure 3e: shows a cross sectional view of the instrument panel of figure 3d with a layer of lacquer thereon.

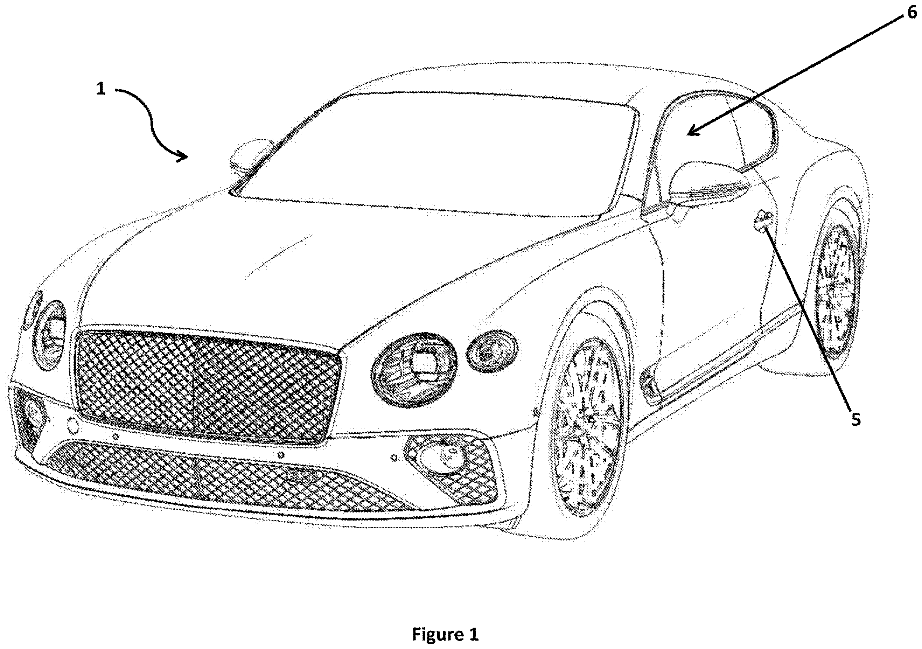

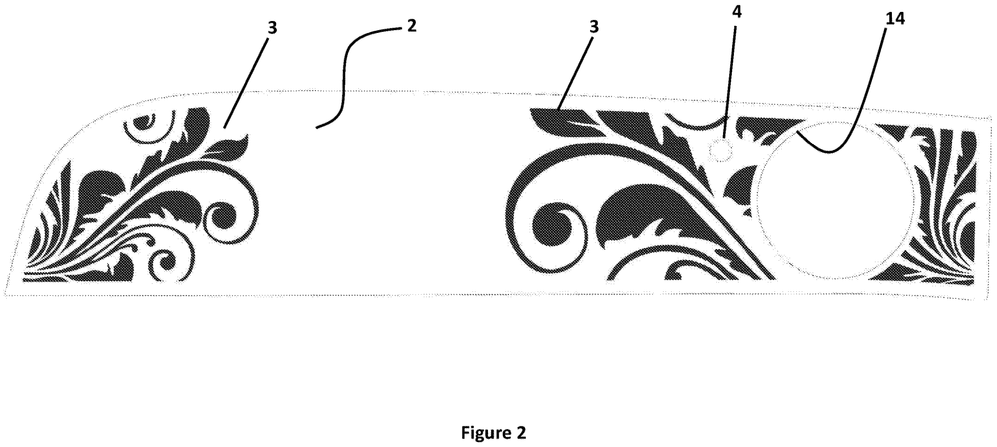

With reference to the drawings, automobiles 1, such as that shown in figure 1 are made up of a number of different components, including trim panels. The automobile 1 of the invention comprises an instrument panel 2, shown in figure 2, which includes a ceramic inlay 3 forming a decorative pattern.

The instrument panel 2 is a passenger instrument panel and also comprises an aperture 14 for an air vent and an aperture 4 for a control for the air vent. Whilst described in the context of this particular instrument panel 2, the inlay 3 discussed below, could be provided in another trim component, and indeed another component of the automobile 1, such as the door handle 5 shown in figure 1, or a component of the passenger compartment 6, such as a gearknob (not shown), switchgear, or the like, could be formed of the material discussed below formed of a powder in a resin.

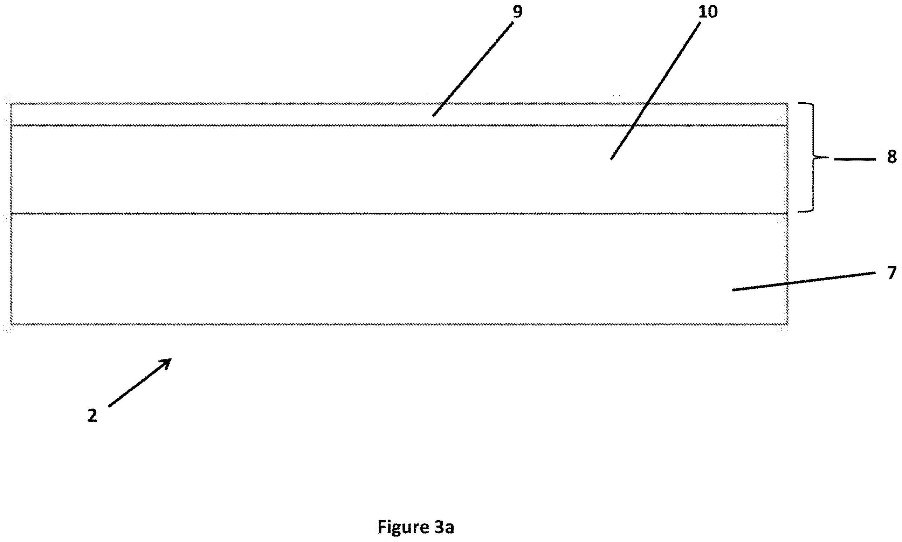

Turning to the specific example of the instrument panel 2, this begins, as shown in figure 3a, as a substrate 7 for connection (e.g. by fasteners, clips or adhesive not shown) to an interior surface of the automobile 1, having a lamination pack 8 attached thereto. The lamination pack 8 comprises a veneer 9 (in this example formed of wood) adhered to a support 10, which in turn is attached (e.g. adhered) to the substrate 7. The substrate 7 may be formed of aluminium, with the support 10 formed of wood. But of course there are numerous alternatives, for example composites (e.g. a carbon fibre/plastics composite) could play this role.

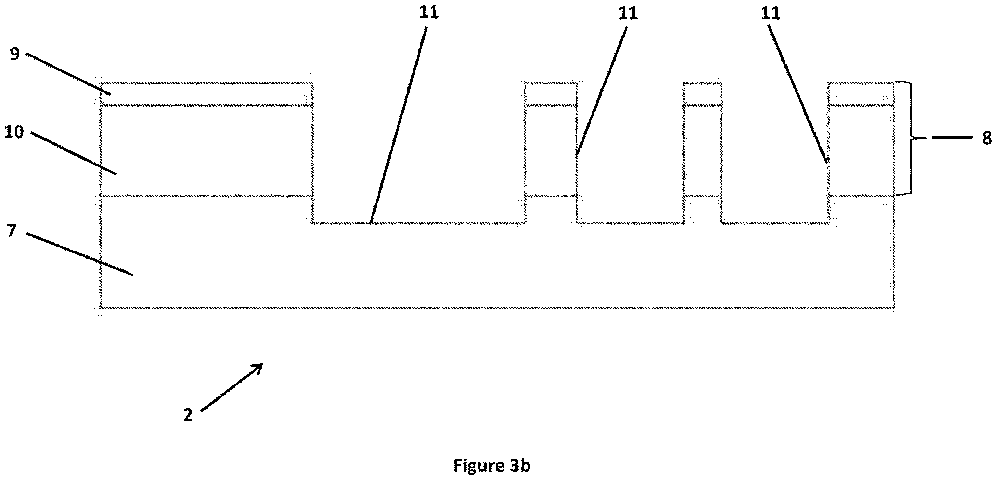

With reference to figure 3b, to form the inlay 3, recesses, or "trenches" 11 are milled into the "A" surface of the instrument panel 2 in the shape of the pattern shown in figure 2. The recesses 11 are cut right through the lamination pack 8 into the substrate 7, to a depth of at least 1.2mm, for example 2mm or 3mm.

Separately, a porcelain ceramic is prepared in the conventional manner, e.g. a quantity of "porcelain body" can be purchased from a vendor. The composition of the porcelain body does not appear at all critical, but suitable materials of porcelain body include feldspar, quartz alumina and kaolin.

The porcelain body is then fired (for example at 1000 degrees C) in the normal way. Rather than firing, post-fired porcelain could be purchased, from numerous suppliers, such as Wade Ceramics Limited of Stoke on Trent, UK. Indeed, factory seconds, or broken items could be purchased. The post-fired porcelain is then finely ground into a powder with an average particle size of around 0.1 microns.

The ground powder of post-fired porcelain is then mixed with a clear epoxy resin at a ratio of around 1:1 to 1:3 Powder : Resin, to form a paste 12. A suitable resin is "Glasscast Clear Epoxy Surface Resin" available from Easy Composites Ltd of Stoke on Trent, UK. Other powders could be mixed with resin in the same way, for example, Alumina powder could be used.

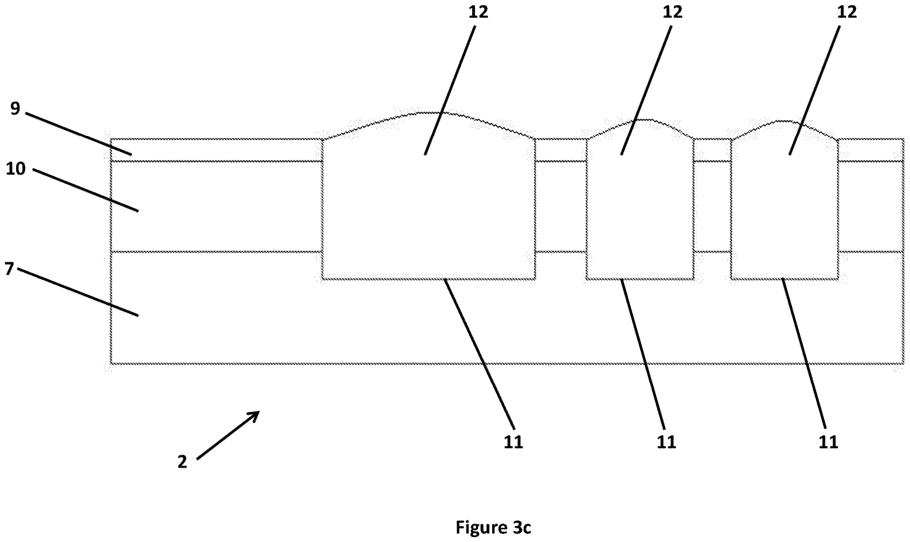

As shown in figure 3c, the paste 12 formed of powdered post-fired porcelain in an epoxy resin is then poured or pressed (or a combination of both) depending on its viscosity into the recesses 11.

The paste is poured or pressed in to the recesses in such a manner that it is over-filled, extending beyond the "A" surface. Then, the instrument panel 2 is vacuumed (using known apparatus for lamination), or shaken to remove bubbles from the paste 12, then allowed to air-cure.

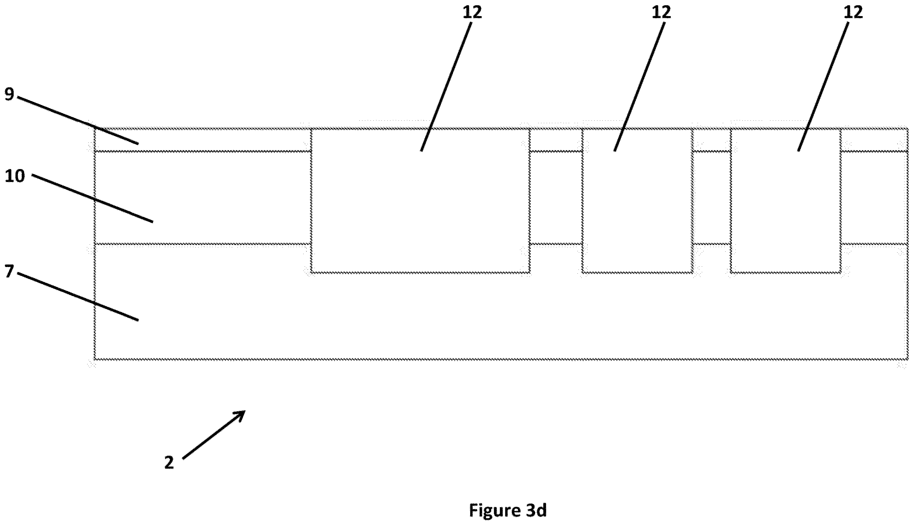

Once cured, as shown in figure 3d, the entire "A" surface of the instrument panel 2 is sanded to smooth both the cured ceramic paste 12 and the veneer 9 adjacent thereto, so as to produce a flat surface with the inlaid ceramic in the resin 12 keyed to the surrounding veneer 9.

Optionally, and not shown, at this stage, the inlay of ceramic in resin 12 can be enamelled by painting with enamel paint.

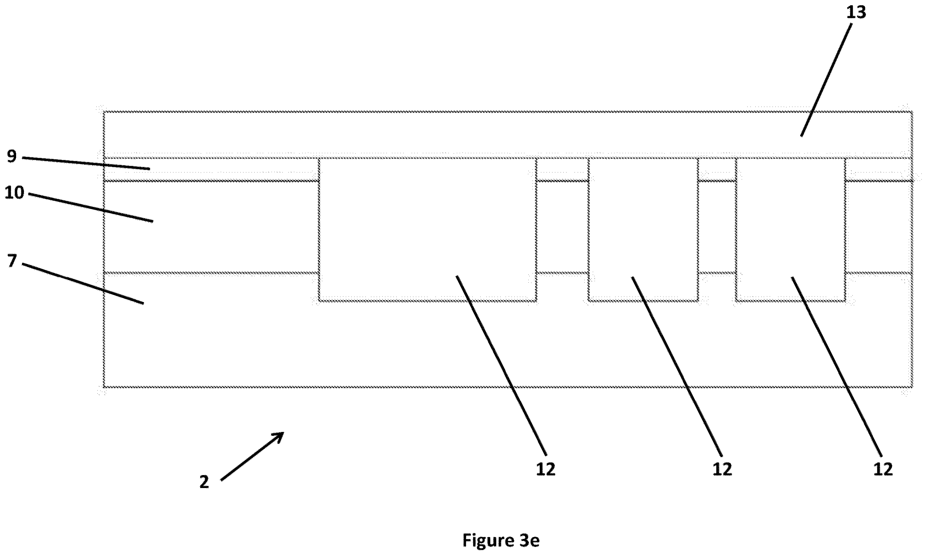

Finally, as shown in figure 3e a layer of clear, open pored, polyurethane lacquer 13 is coated over the outer surface of the veneer 9 and ceramic-in-resin inlay 12. The use of open pored lacquer allows the "coolness" of the porcelain to be felt at the surface. This can be important in the luxury context, where imitation is undesirable, so an item that is formed of porcelain should have the look and feel of porcelain.

The above embodiment is described by way of example only. Many variations are possible without departing from the scope of the invention as defined in the appended claims.

## Claims

1. An automotive component having an inlay (3) formed of a powder in a resin wherein the powder is or comprises ceramic powder.

2. An automotive component according to any preceding claim wherein the inlay is formed in recess (11) having a depth of at least 1.2mm.

3. An automotive component according to any preceding claim which is a trim panel or instrument panel (2); and/or is a component of the interior of an automobile.

4. An automotive component according to any preceding claim wherein the component comprises a decorative veneer (9) and the inlay (3) is provided in the veneer (9).

5. An automotive component according to claim 4 wherein the veneer (9) is provided as part of a lamination pack (8), having a support (10), for attachment to a substrate (7), the support (10) being attached to the substrate (7) and the recess (11) extending through the veneer (9) and the support into the substrate (7).

6. An automotive component according to any preceding claim wherein the resin is clear.

7. An automotive component according to any preceding claim wherein the resin is coloured, comprising a dye or pigment.

8. An automotive component according to any preceding claim which is lacquered.

9. An automotive component according to any preceding claim comprising a layer of enamel paint on the powder in the resin, or on part thereof.

10. A method of forming an inlay (3) in an automotive component comprising mixing a ceramic powder into a resin to form a paste (12) and introducing the paste into a recess (11) in the component.

11. A method according to claim 10 comprising forming a recess (11) in the automotive component; and optionally, wherein the recess (11) is formed through a veneer (9) and through a laminate pack (8) into a substrate (7).

12. A method according to claim 10 or 11 wherein the method comprises removing bubbles from the paste (12) by vacuuming or shaking.

13. A method according to any of claims 10 to 12 comprising painting the set paste (12) with enamel paint prior to lacquering (13).

## Patentansprüche

1. Fahrzeugkomponente mit einer Einlage (3), die aus einem Pulver in einem Harz gebildet ist, wobei das Pulver Keramikpulver ist oder umfasst.

2. Fahrzeugkomponente gemäß einem der vorangehenden Ansprüche, wobei die Einlage in einer Aussparung (11) mit einer Tiefe von mindestens 1,2 mm gebildet ist.

3. Fahrzeugkomponente gemäß einem der vorangehenden Ansprüche, die eine Verkleidung oder ein Armaturenbrett (2) ist; und/oder eine Komponente des Innenraums eines Automobils ist.

4. Fahrzeugkomponente gemäß einem der vorangehenden Ansprüche, wobei die Komponente eine dekorative Verblendung (9) umfasst und die Einlage (3) in der Verblendung (9) bereitgestellt ist.

5. Fahrzeugkomponente gemäß Anspruch 4, wobei die Verblendung (9) als Teil eines Beschichtungspakets (8) bereitgestellt ist, das ein Stützelement (10) zur Anbringung an einem Trägermaterial (7) aufweist, wobei das Stützelement (10) an dem Trägermaterial (7) angebracht ist und die Aussparung (11) sich durch die Verblendung (9) und das Stützelement in das Trägermaterial (7) erstreckt.

6. Fahrzeugkomponente gemäß einem der vorangehenden Ansprüche, wobei das Harz klar ist.

7. Fahrzeugkomponente gemäß einem der vorangehenden Ansprüche, wobei das Harz farbig ist und einen Farbstoff oder ein Pigment umfasst.

8. Fahrzeugkomponente gemäß einem der vorangehenden Ansprüche, die lackiert ist.

9. Fahrzeugkomponente gemäß einem der vorangehenden Ansprüche, die eine Schicht aus Emaillefarbe auf dem Pulver in dem Harz oder auf einem Teil davon umfasst.

10. Verfahren zum Bilden einer Einlage (3) in einer Fahrzeugkomponente, das Mischen eines Keramikpulvers in ein Harz zum Bilden einer Paste (12) und Einbringen der Paste in eine Aussparung (11) in der Komponente umfasst.

11. Verfahren gemäß Anspruch 10, das Bilden einer Aussparung (11) in der Fahrzeugkomponente umfasst; und, optional, wobei die Aussparung (11) durch eine Verblendung (9) und durch ein Beschichtungspaket (8) in ein Trägermaterial (7) gebildet wird.

12. Verfahren gemäß Anspruch 10 oder 11, wobei das Verfahren Entfernen von Blasen aus der Paste (12) durch Absaugen oder Schütteln umfasst.

13. Verfahren gemäß einem der Ansprüche 10 bis 12, das Anstreichen der festen Paste (12) mit Emaillefarbe vor einem Lackieren (13) umfasst.

## Revendications

1. Elément de véhicule automobile ayant une incrustation (3) formée d'une poudre dans une résine, dans lequel la poudre est ou comprend de la poudre de céramique.

2. Elément de véhicule automobile suivant n'importe quelle revendication précédente, dans lequel l'incrustation est formée dans un creux (11) d'une profondeur d'au moins 1,2 mm.

3. Elément de véhicule automobile suivant n'importe quelle revendication précédente, qui est un panneau de garniture ou un tableau (2) de bord ; et/ou est un élément de l'intérieur d'une automobile.

4. Elément de véhicule automobile suivant n'importe quelle revendication précédente, dans lequel l'élément comprend un placage (9) décoratif et l'incrustation (3) est prévue dans le placage (9).

5. Elément de véhicule automobile suivant la revendication 4, dans lequel le placage (9) est prévu comme partie d'un paquet (8) de stratification, ayant un support (10) de fixation à un substrat (7), le support (10) étant fixé au substrat (7) et le creux (11) s'étendant dans le substrat (7) en passant à travers le placage (9) et le support.

6. Elément de véhicule automobile suivant n'importe quelle revendication précédente, dans lequel la résine est limpide.

7. Elément de véhicule automobile suivant n'importe quelle revendication précédente, dans lequel la résine est colorée en comprenant un colorant ou un pigment.

8. Elément de véhicule automobile suivant n'importe quelle revendication précédente, qui est verni.

9. Elément de véhicule automobile suivant n'importe quelle revendication précédente, comprenant une couche d'encre-émail sur la poudre dans la résine ou sur une partie de celle-ci.

10. Procédé de formation d'une incrustation (3) dans un élément de véhicule automobile comprenant mélanger une poudre de céramique dans une résine pour former une pâte (12) et introduire la pâte dans un creux (11) de l'élément.

11. Procédé suivant la revendication 10, comprenant former un creux (11) dans un élément de véhicule automobile et ; éventuellement, dans lequel le creux (11) est formé dans un substrat (7) en passant à travers un placage (9) et un paquet (8) stratifié.

12. Procédé suivant la revendication 10 ou 11, dans lequel le procédé comprend éliminer des bulles de la pâte (12) sous vide ou en secouant.

13. Procédé suivant n'importe laquelle des revendications 10 à 12, comprenant peindre la pâte (12) fixée avec de l'encre-émail avant vernissage (13).
